# EUROPEAN PATENT APPLICATION

(11) **EP 1 379 026 A1**
(43) Date of publication of application: **07.01.2004**
(21) Application number: 02023055.3
(22) Date of filing: 16.10.2002
(51) Int. Cl.: H04L 12/28

(54) **Dual rate wireless transmission system**

(30) Priority: 03.07.2002 EP 02014729
(71) Applicant: Sony International (Europe) GmbH, 10785 Berlin (DE)
(72) Inventor: Boehnke, Ralf, Adv. Tech. Center Stuttgart, 70327 Stuttgart (DE); Amir-Alikhani, Hamid, Adv. Tech. Center Stuttgart, 70327 Stuttgart (DE); Uno, Masahiro, Adv. Tech. Center Stuttgart, 70327 Stuttgart (DE); Stirling-Gallacher, R, Adv. Tech. Center Stuttgart, 70327 Stuttgart (DE)
(74) Representative: Rupp, Christian, Dipl.Phys.

(57) **Abstract**

The invention pertains to a dual-mode wireless transmission system operated in a wireless ad-hoc manner using a low-bit-rate, continuous wireless signaling channel for conveying a wireless status and/or control information and a high-bit-rate data channel assigned on demanded bases at the same time. In this connection, the low-bit-rate channel assists and manages the high-bit-rate data channel. Furthermore, the low-bit-rate wireless channel and the high-bit-rate data channel employ different radio transmission technologies (optimized for the specific purpose) and are operated logically in parallel.

## Description

The present invention relates to a wireless transmission system, to a method for operating a wireless transmission system, to a mobile computing device, such as a portable telephone, as well as to a computer software program product for implementing such a method for operating a wireless transmission system.

The background of the present invention is the field of wireless ad-hoc networks. An ad-hoc (or "spontaneous") network is a local wireless or other small network, especially one with wireless or temporary plug-in connections, in which some of the network devices are part of the network only for the duration of the respective communication session and/or, in the case of mobile or portable devices, nodes/devices can dynamically join or leave the ad-hoc network while in close proximity to the rest of the network.

As an example, the term "ad-hoc network" has been applied to office or home networks in which new devices, using e.g. the Bluetooth technology, in which devices communicate with the computer and other devices using wireless transmission, can quickly be added.

As an application example, one vendor can offer an ad-hoc technology access, allow people to come to a conference room, and, using a wireless transmission (infrared, radio frequency, etc.) for transmitting wireless signals, join the notebook computers with other conferees to a local network with shared data and printing resources. Each user can have a unique network address that is immediately recognized as a part of the network.

Such an ad-hoc-network technology can also include remote users and wireless or wired connections.

The present invention particularly deals with the management of a transmission of data with different status, such as e.g. status information and content information data in such an ad-hoc network, and specifically with the management of the radio network itself.

One state-of-the-art approach in this regard consists in using only one radio channel for low-bit-rate and high-bit-rate data transmission using the same or different transmission format.

Another proposal is, e.g. in the connection with UMTS, to have an additional data channel having the same transmission format.

Generally, current existing systems (using only one transmission system for control data and content data) have several disadvantageous. Some of them are:
- The design (e.g. the transmission format) is tailored towards "one aspect" of the specification, e.g. good high-bit-rate support or good low-bit-rate support. This imposes either an unduly complex design and specification (if designed for high bit rate but used for low bit rate) or insufficient performance (e.g. design for low cost and low bit rate but used for high bit rate).
- Controlling data and content data information is mixed, which means that in order to detect controlling information the data has to be detected at the same time, which results in an unnecessary complexity of the entire system.
- In a wireless ad-hoc network, the partial usage of a single wireless "pipe" (e.g. a broadband pipe) is difficult as only a single broadband pipe can exist within the wireless ad-hoc network and thus has to be shared. This involves complex coordination between all nodes which need to utilize this pipe for the exchange of simple control information between any of these nodes.

From the PCT application WO 01/22662 A1 a dual-mode subscribing unit for short-range, high-rate and long-range, and lower-rate data communications, respectively, is known. According to this known technique, for communicating with a Local Area Network (LAN) via a wireless connection it is determined whether a first short-range, high-speed wireless communication path is available and a connection to the LAN is built up using a longer-range, lower-speed wireless communication path in case the short-range, high-speed wireless communication path is not available. The low-range, high-speed wireless communication path can be a Wireless Local Area Network (WLAN) connection, such as e.g. an IEEE 802.11-compliant WLAN and a long-range, low-speed wireless communication mode can be a cellular CDMA-type connection. It should be noted that according to this known technique the two modes can only be used in an exclusive manner, which means that either the high-speed or the low-speed connection is built up. Correspondingly, there can be mutual assistance and cooperation between these two modes.

In view of the captioned problems encountered with the prior art, it is the object of the present invention to propose a technology for managing ad-hoc wireless transmission systems in a more efficient manner.

This object is achieved by means of the features of the independent claims. The dependent claims develop further the central idea of the present invention.

According to one aspect of the present invention, a wireless transmission system comprising a high-bit-rate and a low-bit-rate channel working in parallel is proposed. Thereby, the low-bit-rate channel is a permanent link to continuously signaled status data, whereas the high-bit-rate channel is only assigned on demand.

It should be noted that the expression "permanent link" does only relate to the eventually limited time duration of a communication section within the ad-hoc network environment. Furthermore, the establishment of such a logical link may not necessarily imply a continuously occupied radio link.

According to the invention, the high-bit-rate channel and the low-bit-rate channel use different data transmission schemes.

The high-bit-rate channel and the low-bit-rate channel can use different modulation schemes and/or different transmission frequencies.

The low-bit-rate channel between two nodes can be working in parallel and without (global) synchronization with low-bit-rate channels of other nodes of the same wireless transmission system.

The low-bit-rate channel can be designed to assist the high-bit-rate channel for data reception.

The low-bit-rate channel can be designed to transmit information (content) data in addition to the status data.

The high-bit-rate channel can be unidirectional, while the low-bit-rate channel can be bidirectional.

The wireless transmission system according to the present invention can comprise a single high-bit-rate channel assigned to two nodes on demand as well as a plurality of low-bit-rate channels.

The assignment (sharing) of the "broadband pipe" can be controlled via the low-bit-rate channels.

According to another aspect of the present invention, a wireless transmission system comprising a high-bit-rate channel and a low-rate channel working logically in parallel is disclosed. The low-rate channel thereby transmits data for the management of the high-bit-rate channel. The high-bit-rate channel and the low-rate channel thereby use different data transmission schemes.

The low-bit-rate channel can be used to activate/deactivate the high-bit-rate channel between two terminals of the wireless transmission system.

A pre-negotiation process for the high-bit-rate channel can be carried out via the low-bit-rate channel.

The channel conditions for the high-bit-rate channel can be pre-qualified via a channel estimation carried out by means of the low-bit-rate channel.

A timing synchronization of the high-bit-rate channel can be at least partially be carried out via a timing synchronization between two terminals over the low-bit-rate channel.

A common clock can be used for the high-bit-rate and the low-bit-rate channel, and a frequency synchronization for the high-bit-rate channel is carried out via the low-bit-rate channel.

According to a still further aspect of the present invention, a method for operating a wireless transmission system is proposed, the system comprising a high-bit-rate and a low-bit-rate channel working in parallel. Thereby, the low-bit-rate channel is permanently maintained during the time duration of a communication session within the ad-hoc environment, e.g. to continuously signal status data. The high-bit-rate channel is assigned on demand. In this connection, the high-bit-rate channel and the low-bit-rate channel use different data transmission schemes.

The high-bit-rate channel and the low-bit-rate channel can use different modulation schemes and/or transmission frequencies.

The network can be set-up in an ad-hoc manner.

The low-bit-rate channel between two nodes can be working in parallel and without (global) synchronization with low-bit-rate channels or other nodes of the wireless transmission system.

The low-bit-rate channel assists the high-bit-rate channel for data reception.

The low-bit-rate channel can transmit information (content) data in addition to the status data.

The high-bit-rate channel can be unidirectional while the low-bit-rate channel can be bidirectional.

A single high-bit-rate channel (e.g. a single broadband pipe) can be assigned to two nodes on demand.

This assignment (sharing) of the broadband pipe can be controlled via the low-bit-rate channels.

According to a further aspect of the present invention, a mobile computing device configured to support such a method is proposed.

Finally, a computing software program product implementing such a method is envisaged.

In general, the present invention describes a wireless transmission system which can be operated in a wireless ad-hoc manner and employs low-rate, "continuous" wireless signaling for maintaining status information (e.g. synchronization, identifiers) augmented by a high-rate data channel assigned on a demanded basis. The wireless low-bit-rate and the high-bit-rate channel use a different radio transmission technology (optimized for the specific purpose) and can be operated in parallel.

Further advantages, details and objects of the present application will become evident for the man skilled in the art when reading the following detailed explanation of exemplary embodiments of the invention in conjunction with the enclosed drawings. Thereby,
Fig. 1 shows a wireless ad-hoc transmission system combining two different radio transmission schemes,
Fig. 2 shows in more detail the use of low-bit-rate channels and a high-bit-rate channel in the system according to Fig. 1,
Fig. 3 shows a transceiver architecture for a mobile device supporting a system according to claims 1 and 2, respectively, and
Fig. 4 shows a transmission scheme according to the present invention.

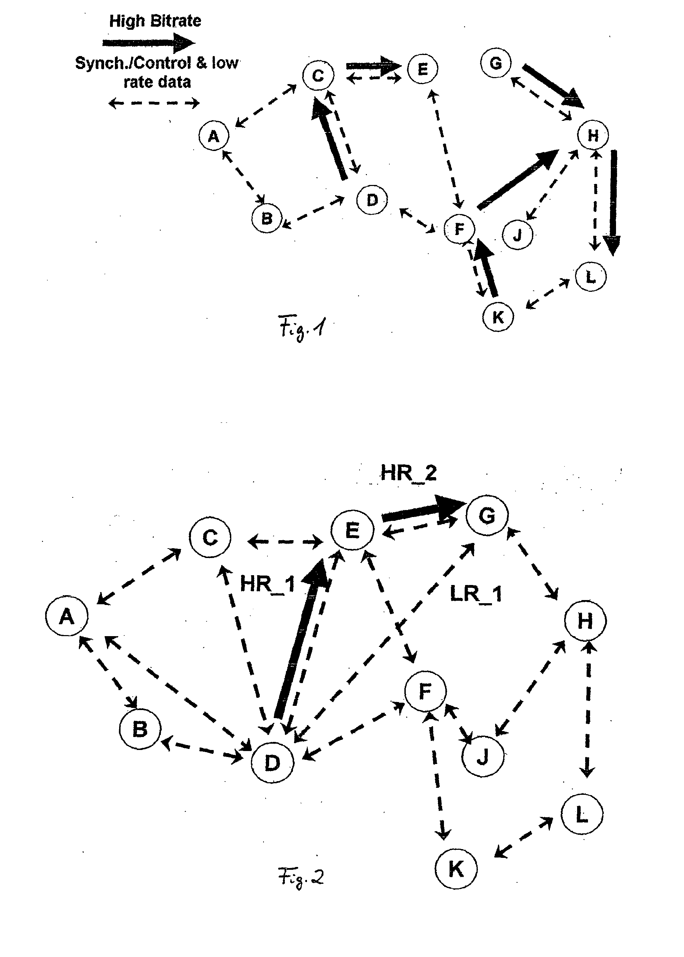

Fig. 1 shows the principles of a system according to the present invention, wherein a low-bit-rate data channel and a high-bit-rate data channel are combined. The low-bit-rate data channel (indicated by the bidirectional broken arrows) can e.g. be used for sending low-bit-rate data and assisting the unidirectional high-bit-rate channel. In the embodiment according to Fig. 1, a plurality of high-bit-rate channels are shown, however, the use of a high-bit-rate channel might be restricted to one single high-bit-rate channel, shared between different nodes (A, B, C, D, E, F, G, H, I, J, K, L) on a time-sharing basis. Multiple high-bit-rate channels may, however, exist in the ad-hoc network on the same carrier frequency if interference conditions allow to do so. Alternatively, multiple high-bit-rate channels can exist on different carrier frequencies.

In the following, further details of the present invention will be explained with reference to Fig. 2.

As shown in Fig. 2, a low-bit-rate data link (indicated by broken arrows) achieves a higher (bidirectional) connectivity with long range. The high-bit-rate data link (indicated by unidirectional arrows) is only assigned between neighboring nodes. In this connection, the low-bit-rate data link is designed to be more robust in comparison to the high-bit-rate data link and can thereby connect to much more nodes within the network (e.g. between the more distant nodes A and D). This allows (1) a direct data exchange between distant nodes without a employing a multi-hopping over different nodes and (2) an assistance for the set-up of a possible high-bit-rate link.

The higher network connectivity of the low-bit-rate link is exemplarily illustrated in Fig. 2 for node D, which can also have a direct connection to the distant node G over a low-bit-rate link denoted as LR_1.

Furthermore, a plurality of low-bit-rate bidirectional data links can exist within the ad-hoc network at the same time. By contrast, high-bit-rate data links can only be set up between neighboring nodes (see e.g. the high-bit-rate data link HR_1 between nodes D and E and HR_2 between nodes E and G). The high-bit-rate links can be used in a time-shared manner (not shown in Fig. 2) if the high-bit-rate channel is only operated on one designated carrier frequency.

The multiple low-bit-rate data links (between nodes D and E, E and G, and D and G) can be used to set up, control and assist the high-bit-rate unidirectional connection between D and G, which is multi-hopped via node I.

As already mentioned before, the low-bit-rate channel assists the establishment and usage of the high-bit-rate channel by exchanging management information for the high-bit-rate channel. The low-bit-rate channel can thereby be used to exchange system information, e.g. identifications, and assist the additionally established broadband channel used for data reception (i.e. by supporting the time and frequency synchronization and data demodulation on the broadband channel).

For example, a timing synchronization and/or frequency offset compensation can be done by using the lower-bit-rate channel in case the lower- and higher-bit-rate transceivers use a common clock oscillator in a time base counter. In this case, the header bits of the higher-bit-rate channel, which are used for timing/frequency synchronization, can be simplified, and thus the overhead of this channel can be reduced.

Furthermore, the low-bit-rate channel can be used to exchange the quality information of the high-bit-rate channel between a transmitter and a receiver. It is thus possible to adjust the modulation scheme of the high-bit-rate channel in an adaptive manner depending on the quality information (channel estimation) of the lower-bit-rate channel. Since the transmission quality of the low-bit-rate channel is generally higher than that of the high-bit-rate channel, it is reliable to exchange the quality information, and a more effective modulation scheme control can be employed compared to the state-of-the-art techniques. It also possible to control the routing (the multi-hopping path) based on the channel quality information conveyed via the low-bit-rate channel(s).

In general, the low-bit-rate channel are able to manage the high-bit-rate channel. It should be noted that this can not only be done in the sense of a loose coupling between the two channels (e.g. by an activation/deactivation of the high-bit-rate channel via the low-bit-rate channel), but also in the sense of a tight coupling (e.g. by a pre-qualification of the high-bit-rate channel via the low-bit-rate channel, a pre-negotiation of the establishment of the high-bit-rate channel via the low-bit-rate channel, timing and frequency synchronization, etc.).

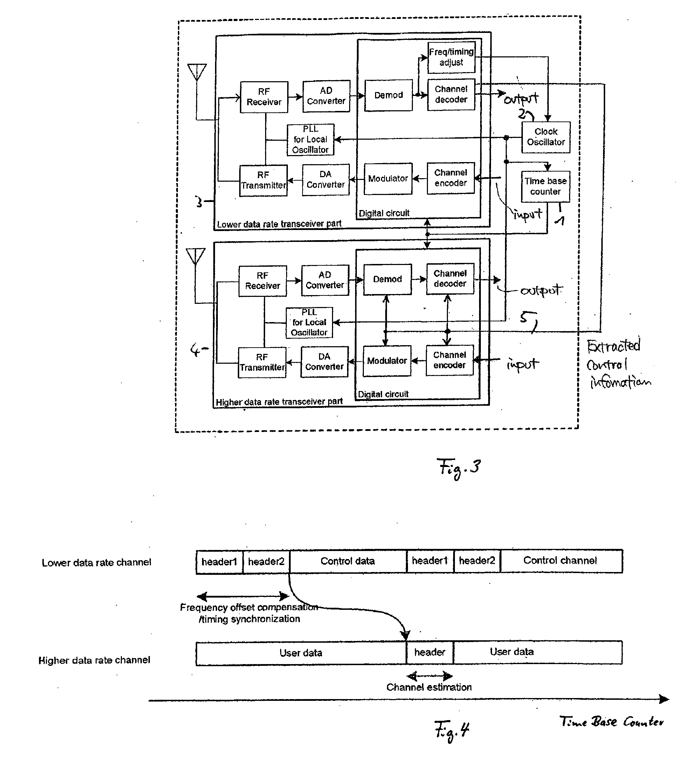

Fig. 3 schematically shows a block diagram of a combined (low-bit-rate and high-bit-rate) transceiver. The low-bit-rate and the high-bit-rate unit share the same time base counter 1 (timing controller) and frequency generation unit 2 (local oscillator). This allows a timing and frequency synchronization of the high-bit-rate part 4 based on a signal demodulation of the information received in the low-bit-rate unit 3 via the low-bit-rate channel, thereby assisting the high-bit-rate channel via a data link using the low-bit-rate channel.

Furthermore, a signaling line 5 between the high-bit-rate transceiver part 4 and the low- bit-rate transceiver part 3 is disclosed, which illustrates one possibility of influencing the transmission process of the high-bit-rate transceiver part 4 (e.g. the modulation procedure) by the low-bit-rate transceiver part 3 (e.g. by modifying the high-bit-rate connection by information received over the low-bit-rate connection).

Examples for such control information are e.g. negotiation information for high-bit-rate connection parameters such as data rate, transmission power, timing, used carrier frequency, etc.

Fig. 4 finally shows how the controlling overhead of the high-bit-rate channel can be reduced by using information provided via the low-bit-rate channel.

As shown in Fig. 4, information encompassing timing synchronization data and/or the frequency of the compensation can be transmitted by using the low-bit-rate channel, when the low-bit-rate transceiver part 3 and the high-bit-rate transceiver part 4 use a common clock oscillator 2 in the common time base counter 1 depicted in Fig. 3. In this case, it is possible to reduce the headers of the higher-bit-rate channel for timing/frequency synchronization and thus to generally reduce the overhead of this channel.

In Fig. 4, it is furthermore indicated that by providing channel estimation information used for a timing and frequency synchronization only on the low-bit-rate connection (the upper part of Fig. 4) the controlling information overhead on the high-bit-rate channel can drastically be reduced (cf. Fig. 4, lower part).

Fig. 4 also shows the separation of control data and user (information content) data by using the low-bit-rate connection for control data and the high-bit-rate connection for user data, respectively.

To summarize, in the wireless ad-hoc system according to the present invention two different transmission schemes are used:
1) low-rate channels (narrow band) to establish a basic communication link (channel) between the mobile devices within the wireless ad-hoc network. These channels can typically work in parallel (without global synchronization between all nodes) by local synchronization between two nodes communicating via the low-bit-rate channel. This is depicted by the broken arrow between the nodes A and C in Fig. 1;
2) a high-rate channel (broadband pipe) between two neighboring nodes used to deliver broadband information between two nodes.

The following characteristics describe more details of the system and the respectively destined communication channels:
1) The two different communication channels can use different radio transmission schemes (e.g. one optimized for a low-bit-rate data exchange, the other optimized for high data rates). One possibility is e.g. to use a Direct Sequence Spread Spectrum (DSSS) technique, possibly combined with Frequency Hopping (FH) or Time-Division Duplex (TDD) for the low-bit-rate channel. The high-bit-rate channels, however, may use other modulation and transmission schemes, e.g. Orthogonal Frequency Division Multiplexing (OFDM), Ultra-Wide Band (UWB) and/or other wireless communication technologies.
2) The low-bit-rate channels are used to exchange vital system information, e.g. identifications, and assist the additionally established broadband channel used for data reception (e.g. by supporting the synchronization and data demodulation on the broadband channel).
3) The low-bit-rate channels can be used to additionally exchange low-bit-rate data (besides the vital system information), where the establishment of a broadband pipe is not required.
4) The high-bit-rate channels are used for the transmission of user data, while control information may still flow via the maintained low-bit-rate control channels.
5) The low-bit-rate channels are able to be operated logically in parallel between the devices, without (or a very limited) coordination (which means coordination between two communicating devices, but no global coordination within the network).
6) The low-bit-rate links are always bidirectional, whereas the high-bit-rate channels are unidirectional. (For example, between node C and node E an unidirectional broadband link is established in parallel to the low-bit-rate channel.)
7) Only one high-bit-rate pipe, which can be shared between the nodes requiring it, may exist in the wireless ad-hoc network. The sharing mechanism may also be used for reverting the direction of the high-bit-rate pipe between two nodes.
8) The low-bit-rate channels have a much denser connectivity map within the ad-hoc network topology, which means many of those can exist, whereas the number of high-bit-rate channels is much smaller (possibly even limited to one and shared between). The low-bit-rate channels are used to coordinate the sharing of the high-bit-rate channels.
9) The system is very scaleable as within the same architectural framework both low-bit-rate and high-bit-rate data transmission is supported.

The main advantages provided by the present invention in comparison to the state-of-the-art technologies can be listed as follows:
- Existing systems are limited in their ad-hoc features (e.g. Bluetooth) or high-bit-rate support as only one transmission scheme is used for low-/high-rate user data and control information.
- Existing systems need tight global control (e.g. timing) between all nodes participating in the network (e.g. Bluetooth).
- The system is very scaleable as within the same architectural framework low-bit-rate and high-bit-rate data transmission is supported. Devices within the network which do not require high-bit-rate channels are also supported (low-cost implementation).
- An adequate (optimized) radio transmission scheme is used for different purposes of low-bit-rate control information and high-bit-rate user data.
- Wireless ad-hoc features are easily supported as the low-bit-rate channels are designed to have a significantly better connectivity within the network and require no global coordination (only local coordination between two nodes is beneficial).
- The high-bit-rate user data can have very good quality as they are not disturbed by low-bit-rate coordination channels.
- The high-bit-rate channel is assisted by the low-bit-rate channel, which simplifies the reception and can be used to achieve a lower-cost and/or lower-power implementation of the overall transmission system.

In the proposed wireless ad-hoc system two different transmission schemes are used for two different purposes:
- a lower-bit-rate channel to establish a basic communication channel between the devices within the wireless ad-hoc network. These channels can typically work in parallel (without global synchronization between all nodes) by local synchronization between the two nodes communicating via this channel. This is e.g. depicted (Fig. 1) by the broken arrow between the nodes (A) and (C);
- a higher-bit-rate channel between neighboring nodes used to deliver broadband information between two nodes.

The following properties describe some more details of the system and the respective distinct communication channels:
- The two different communication channels can use different radio transmission schemes (e.g. one optimized for low-bit-rate data exchange, the other optimized for high data rates). One possibility is e.g. to use Direct Sequence Spread Spectrum (DSSS), possibly combined with Frequency Hopping (FH) or Time-Division Duplex (TDD) for the low-bit-rate channel. The high-bit-rate channel may use other wireless transmission schemes, e.g. Orthogonal Frequency Division Multiplex (OFDM), and another operation frequency.
- The low-bit-rate channels are used to exchange vital system information, e.g. identification, and assist the additional established broadband channel used for data reception (e.g. by assisting the synchronization and data demodulation of the broadband channel).
- The low-bit-rate channel can be used to additionally exchange low-bit-rate data (aside from the vital system information), when the establishment of a broadband pipe is not required.
- The high-bit-rate channel is used for user data information transmission, whereas control information may still flow via the maintained low-bit-rate control channel.
- The low-bit-rate channels can be operated in parallel between the devices, without (or a very limited) coordination (which means coordination between two communicating devices, but no global coordination within the network).
- The low-bit-rate links are bidirectional, whereas the high-bit-rate channels are unidirectional. (For example, between node C and node E depicted in Fig. 1 an unidirectional broadband link is established in parallel over the low-bit-rate channel.)
- Only one high-bit-rate pipe may exist in the wireless ad-hoc network, which can be shared between the nodes requiring it.
- The low-bit-rate channels have a much denser connectivity map within the ad-hoc network technology, which means many of those can exist, whereas the number of high-bit-rate channels is much smaller. The low-bit-rate channels are used to coordinate the sharing of the high-bit-rate channels.
- Only one high-bit-rate channel, that can be shared on temporal assignment bases between the nodes requiring it, may exist in the wireless ad-hoc network.
- Multiple high-bit-rate channels may exist in parallel if the interference conditions allow to do so. (High-bit-rate channels do not disturb each other.)
- The system is very scaleable as within the same architectural framework both low-bit-rate and high-bit-rate data transmission is supported.
- When the high-bit-rate channel is used, high-bit-rate information intended for a given (distant) node may be routed over one or more other nodes. This is known as Frequency Hopping (FH) or multi-hopping (sometimes called "forwarding"). The advantage of this technique is that the frequency range can be increased, transmit power can be reduced, and power consumption can be decreased. The method is illustrated in Fig. 1, where information from node D is transferred via node C to the final destination node E.

## Claims

1. A wireless transmission system,
comprising a high-bit-rate channel and a low-bit-rate channel working logically in parallel,
the low-bit-rate channel being a permanent link to continuously signal data for the management of the wireless transmission system, and the high-bit-rate channel being assigned on demand,
wherein the high-bit-rate channel and the low-bit-rate channel use different radio transmission schemes.

2. A wireless transmission system according to claim 1,
**characterized in that**
the high-bit-rate channel and the low-bit-rate channel use different modulation schemes and/or transmission frequencies.

3. A wireless transmission system according to anyone of the preceding claims,
**characterized in that**
it is a wireless ad-hoc network.

4. A wireless transmission system according to anyone of the preceding claims,
**characterized in that**
the low-bit-rate channel between two nodes is working in parallel and without global synchronization with low-bit-rate channels of other nodes of the wireless transmission system.

5. A wireless transmission system according to anyone of the preceding claims,
**characterized in that**
the low-bit-rate channel is designed to assist the high-bit-rate channel used for data reception.

6. A wireless transmission system according to anyone of the preceding claims,
**characterized in that**
the low-bit-rate channel is designed to transmit information data in addition to the status (control) data.

7. A wireless transmission system according to anyone of the preceding claims,
**characterized in that**
the high-bit-rate channel is unidirectional while the low-bit-rate channel is bidirectional.

8. A wireless transmission system according to anyone of the preceding claims,
**characterized in that**
it comprises a single high-bit-rate channel assigned to two nodes on demand as well as a plurality of low-bit-rate channels.

9. A wireless transmission system according to claim 8,
**characterized in that**
it is designed to assign (or assist) a high-bit-rate channel via said low-bit-rate channels.

10. A wireless transmission system comprising a high-bit-rate channel and a low-bit-rate channel working logically in parallel,
the low-bit-rate channel being a permanent link to continuously signal data for the management of the high-bit-rate channel and the high-bit-rate channel being assigned on demand,
wherein the high-bit-rate channel and the low-bit-rate channel use different radio transmission schemes.

11. A wireless transmission system according to claim 10,
**characterized in that**
the low-bit-rate channel is used to activate/deactivate the high-bit-rate channel between two nodes of the wireless transmission system.

12. A wireless transmission system according to claim 10 or 11,
**characterized in that**
a pre-negotiation process for the high-bit-rate channel is carried out via the low-bit-rate channel.

13. A wireless transmission system according to anyone of claims 10 to 12,
**characterized in that**
the channel conditions for the high-bit-rate channel are pre-qualified via a channel estimation carried out by means of the low-bit-rate channel.

14. A wireless transmission system according to anyone of claims 10 to 13,
**characterized in that**
a timing synchronization of the high-bit-rate channel is at least partially carried out via a timing synchronization between two nodes over the low-bit-rate channel.

15. A wireless transmission system according to anyone of claims 10 to 14,
**characterized in that**
a common clock is used for the high-bit-rate and the low-bit-rate channel and a frequency synchronization for the high-bit-rate channel is carried out via the low-bit-rate channel.

16. A mobile node,
**characterized in that**
it is designed to support a system according to anyone of the preceding claims.

17. A method for operating a wireless transmission system,
the system comprising a high-bit-rate channel and a low-bit-rate channel working logically in parallel,
wherein the low-bit-rate channel is maintained permanently e.g. to continuously signal status (control) data, and the high-bit-rate channel is assigned on demand,
wherein the high-bit-rate channel and the low-bit-rate channel use different radio transmission schemes.

18. A method according to claim 17,
**characterized in that**
the high-bit-rate channel and the low-bit-rate channel use different modulation schemes and/or transmission frequencies.

19. A method according to anyone of claims 17 or 18,
**characterized in that**
the network is set-up in an ad-hoc manner.

20. A method according to anyone of claims 17 to 19,
**characterized in that**
the low-bit-rate channel between two nodes is working in parallel and without global synchronization with low-bit-rate channels of other nodes of the wireless transmission system.

21. A method according to anyone of claims 17 to 20,
**characterized in that**
the low-bit-rate channel assists the high-bit-rate channel used for data reception.

22. A method according to anyone of claims 17 to 21,
**characterized in that**
the low-bit-rate channel transmits information data in addition to the status (control) data.

23. A method according to anyone of claims 17 to 22,
**characterized in that**
the high-bit-rate channel is unidirectional while the low-bit-rate channel is bidirectional.

24. A method according to anyone of claims 17 to 23,
**characterized in that**
a single high-bit-rate channel is assigned between two nodes on demand.

25. A method according to claim 24,
**characterized in that**
the high-bit-rate channel is assigned between nodes via the low-bit-rate channels.

26. A method for operating a wireless transmission system
the system comprising a high-bit-rate channel and a low-bit-rate channel working logically in parallel,
the low-bit-rate channel being a permanent link to continuously signal data for the management of the high-bit-rate channel and the high-bit-rate channel being assigned on demand.

27. A method according to claim 26,
**characterized in that**
the low-bit-rate channel activates/deactivates the high-bit-rate channel between two nodes of the wireless transmission system.

28. A method according to claim 26 or 27,
**characterized in that**
re-negotiation of the high-bit-rate channel is carried out via the low-bit-rate channel.

29. A method according to anyone of claims 26 to 28,
**characterized in that**
the channel conditions for the high-bit-rate channel are pre-qualified via a channel estimation carried out by means of the low-bit-rate channel.

30. A method according to anyone of claims 26 to 28,
**characterized in that**
a timing synchronization of the high-bit-rate channel is at least partially carried out via a timing synchronization between two nodes over the low-bit-rate channel.

31. A method according to anyone of claims 26 to 30,
**characterized in that**
a common clock is used for the high-bit-rate and the low-bit-rate channel and a frequency synchronization for the high-bit-rate channel is carried out via the low-bit-rate channel.

32. A mobile computing device,
**characterized in that**
it is configured to support a method according to anyone of claims 17 to 31.

33. Computer software program product,
**characterized in that**
it implements a method according to anyone of claims 17 to 31 when running on a mobile computing device.
